# EUROPEAN PATENT APPLICATION

(11) **EP 3 885 631 A1**
(43) Date of publication of application: **29.09.2021**
(21) Application number: 19888179.9
(22) Date of filing: 13.11.2019
(51) Int. Cl.: F16M 11/04

(54) **CLAMPING DEVICE**

(30) Priority: 19.11.2018 CN 201821904708 U
(71) Applicant: Winners' Sun Plastic & Electronic (Shenzhen) Co., Ltd., Shenzhen Guangdong 518000 (CN)
(72) Inventor: SHAN, Jinghua, Shenzhen, Guangdong 518000 (CN); PENG, Yi Bing, Shenzhen, Guangdong 518000 (CN)
(74) Representative: Li, Xiaolu
(86) International application number: PCT/CN2019/118223
(87) International publication number: WO 2020/103751

(57) **Abstract**

The present disclosure provides a clamping device. The clamping device includes a vertical arm, a base arranged on a lower end of the vertical arm and configured for holding an external device, and two lateral clamping arms rotatably arranged on two sides of the vertical arm. The two lateral clamping arms are configured to perform a lateral clamping function. At least one of the two lateral clamping arm is stretchable. When in use, the two lateral clamping arms are rotated to an unfolded state separately and then are stretched out to clamp the external device. When the clamping device finishes using, the two lateral clamping arms are rotated to a closed state, which greatly reduces a horizontal size of two sides of the clamping device and is convenient for storage and carrying.

## Description

### TECHNICAL FIELD

The present disclosure relates to a field of photographing auxiliary equipment technology, and in particular to a clamping device.

### BACKGROUND

Nowadays, conventional clamping devices applied to selfie sticks, mobile phone holders, car holders, etc. are mainly divided into up-and-down stretchable clamping devices and horizontal stretchable clamping device. When the object to be clamped is large in volume, clamping of the up-and-down stretchable clamping devices is unstable. Moreover, the horizontal stretchable clamping device has the problem that the clip is large in size and difficult to store and carry.

Thus, the clamping devices in the prior art need to be improved and developed.

### SUMMARY

In view of the above-mentioned defects in the prior art, a purpose of the present disclosure is to provide a clamping device to overcome a problem that a conventional horizontal clamping device has a large volume and is difficult to store and carry.

Technical schemes of the present disclosure are as follows:

The present disclosure provides a clamping device. The clamping device comprises a vertical arm, a base arranged on a lower end of the vertical arm and configured for holding an external device, and two lateral clamping arms rotatably arranged on two sides of the vertical arm. The two lateral clamping arms are configured to perform a lateral clamping function. At least one of the two lateral clamping arm is stretchable.

In one optional embodiment, the two lateral clamping arms are synchronously rotated in opposite directions to unfold or close by a linkage mechanism.

In one optional embodiment, the linkage mechanism comprises two rotating pieces. The two rotating pieces are fixedly connected to a respective lateral clamping arm. The two rotating pieces are meshed with each other.

In one optional embodiment, the two rotating pieces are two gears rotatably arranged on the vertical arm. The two gears are meshed with each other.

In one optional embodiment, the lateral clamping arms are rotatably arranged on the vertical arm through the gears.

In one optional embodiment, the two rotating pieces are respectively a gear and a chain ring. The gear and the chain ring are rotatably arranged on the vertical arm and are meshed with each other.

In one optional embodiment, the two lateral clamping arms are stretchable and are symmetrically arranged.

In one optional embodiment, each lateral clamping arm comprises a handle swing arm rotatably arranged on the vertical arm, a clamping head, a pulling rod, and an elastic piece. One end of each pulling rod is slidably arranged in a corresponding handle swing arm. The other end of each pulling rod is fixedly connected to a corresponding clamping head. Each elastic piece is arranged in a corresponding handle swing arm. One end of each elastic piece is connected to a corresponding pulling rod and the other end of each elastic piece is connected to a corresponding handle swing arm. Each elastic piece is configured to provide an elastic piece for stretching the pulling rod.

In one optional embodiment, each lateral clamping arm comprises an anti-rotation structure preventing rotation of the corresponding pulling rod.

In one optional embodiment, each anti-rotation structure comprises a guide piece fixedly arranged on the corresponding pulling rod that is arranged in the corresponding handle swing arm.

In one optional embodiment, each handle swing arm comprises a lateral sliding groove. One end of each pulling rod is slidably arranged in a corresponding lateral sliding groove. Each guide piece is a non-circular guide piece fixedly connected to the corresponding pulling rod. Each guide piece slidably matches with a corresponding lateral sliding groove.

In one optional embodiment, the vertical arm comprises receiving grooves configured to receive the lateral clamping arms when the lateral clamping arms are closed.

In one optional embodiment, a side wall of each receiving groove has a notch for easy opening of the lateral clamping arms.

In one optional embodiment, the clamping device further comprises a connecting head connected with the base. The connecting head is configured to rotatably connect with the external device.

In one optional embodiment, the vertical arm further comprises a decorative cover. The decorative cover is configured to shield rotating shaft ends of the lateral clamping arms.

In one optional embodiment, the base comprises a first anti-skid groove, and an inner side of the clamping head comprises a second anti-skid groove.

In the present disclosure, by providing the two lateral clamping arms (at least one of the two lateral clamping arm is stretchable) configured to perform a lateral clamping function and rotatably arranged on the two sides of the vertical arm, when in use, the two lateral clamping arms are rotated to the unfolded state separately and then are stretched out to clamp the external device. When use of the clamping device is finished, the two lateral clamping arms are rotated to a closed state, which greatly reduces a horizontal size of two sides of the clamping device and is convenient for storage and carrying.

### BRIEF DESCRIPTION OF DRAWINGS

FIG. 1 is a schematic diagram of a clamping device according to one optional embodiment of the present disclosure where the clamping device is in an unfolded state.
FIG. 2 is a schematic diagram of the clamping device according to one optional embodiment of the present disclosure where the clamping device is in a closed state.
FIG. 3 is a partial cross-sectional schematic diagram of a lateral clamping arm according to one optional embodiment of the present disclosure.
FIG. 4 is a partial exploded schematic diagram of the lateral clamping arm according to one optional embodiment of the present disclosure.
FIG. 5 is a schematic diagram of a selfie device according to one optional embodiment of the present disclosure.
FIG. 6 is a schematic diagram of the selfie device shown in use according to one optional embodiment of the present disclosure.

### DETAILED DESCRIPTION

The present disclosure provides a clamping device. In order to make the objectives, technical solutions, and effects of the present disclosure clear, the present disclosure will be further described in detail below with reference to the accompanying drawings and embodiments. It should be understood that the specific embodiments described here are only used to illustrate the present disclosure, but not to limit the present disclosure.

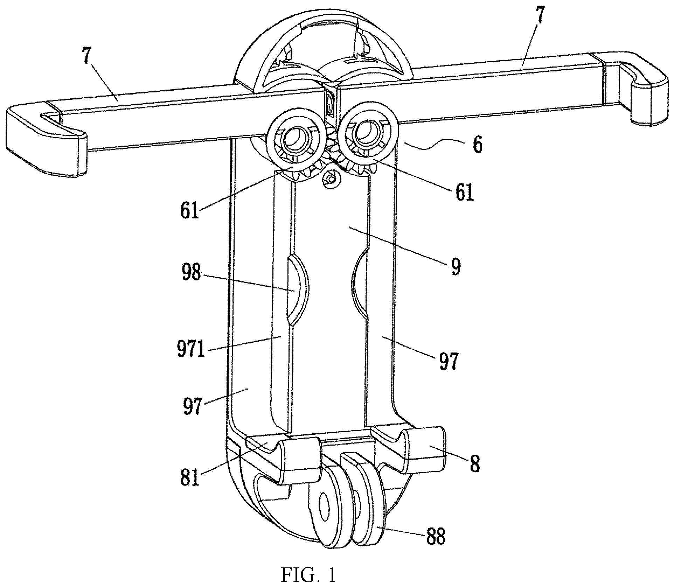

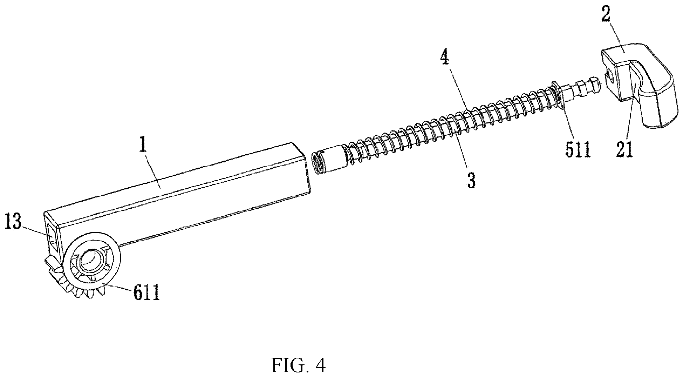

The clamping device of one optional embodiment of the present disclosure can be applied to a variety of occasions such as a selfie stick, a mobile phone holder, a car holder, etc. As shown in FIGS. 1-4, The clamping device comprises a vertical arm 9, a base 8 arranged on a lower end of the vertical arm and configured for holding an external device (e.g., holding a lower end of a mobile phone), and two lateral clamping arms 7 rotatably arranged on two sides of the vertical arm 9. The two lateral clamping arms are configured to perform a lateral clamping function. For example, the two lateral clamping arms are configured to clamp two sides of the mobile phone. At least one of the two lateral clamping arm is stretchable. It is understandable that as long as one of the lateral clamping arms is stretchable, the clamping device achieves an effect of lateral stretching and clamping a shooting device such as the mobile phone. Of course, it is optional that both of the two lateral clamping arms are set to be stretchable. Thus, both sides of the clamping device are stretched to clamp, which help maintain balance and stability of the clamp.

In the present disclosure, by providing the two lateral clamping arms (at least one of the two lateral clamping arm is stretchable) configured to perform a lateral clamping function and rotatably arranged on the two sides of the vertical arm, when in use, the two lateral clamping arms are rotated to an unfolded state separately and then are stretched out to clamp the external device. When use of the clamping device is finished, the two lateral clamping arms are rotated to a closed state, which greatly reduces a horizontal size of two sides of the clamping device and is convenient for storage and carrying.

Furthermore, as shown in FIGS. 1-4, in the embodiment, the two lateral clamping arms 7 are synchronously rotated in opposite directions to unfold or close by a linkage mechanism 6. The linkage mechanism 6 is provided so that as long as one of the lateral clamping arms is opened, the other one synchronously rotates at a same angle in the opposite direction, and when one of the lateral clamping arms is closed, a process is similar as described above. The linkage mechanism 6 comprises two rotating pieces 61. The two rotating pieces 61 are fixedly connected to a respective lateral clamping arm 7. The two rotating pieces 61 are meshed with each other. The two rotating pieces are able to take many forms, as long as they are meshed with each other. For example, the two rotating pieces 61 are respectively a gear and a chain ring. The gear and the chain ring are rotatably arranged on the vertical arm and are meshed with each other. Alternatively, the two rotating pieces 61 are two gears 611 rotatably arranged on the vertical arm 9. The two gears 611 are meshed with each other. The gears 611 are optionally half gears, which make one of the gears meshes with the other gear smoothly. Furthermore, the lateral clamping arms 7 are rotatably arranged on the vertical arm 9 through the gears 611.

Furthermore, as shown in FIGS. 1-4, the two lateral clamping arms 7 are stretchable and are symmetrically arranged. Specifically, each lateral clamping arm 7 comprises a handle swing arm 1 rotatably arranged on the vertical arm 9, a clamping head 2 (a handle), a pulling rod 3, and an elastic piece 4. One end of each pulling rod 3 is slidably arranged in a corresponding handle swing arm 1. The other end of each pulling rod 3 is fixedly connected to a corresponding clamping head 2. Each elastic piece 4 is arranged in a corresponding handle swing arm 1. One end of each elastic piece 4 is connected to a corresponding pulling rod 3 and the other end of each elastic piece 4 is connected to a corresponding handle swing arm 1. Each elastic piece 4 is configured to provide an elastic piece for stretching the pulling rod 3. Each elastic piece is optionally a spring.

Furthermore, each lateral clamping arm 7 comprises an anti-rotation structure 5 preventing rotation of the corresponding pulling rod 3. The anti-rotation structure 5 prevents the clamping head from 360-degree rotation after the clamping head 2 is opened. The anti-rotation structure can be in various forms, for example, the anti-rotation structure may be a pin arranged on the pulling to avoid axial rotation. In the embodiment, each anti-rotation structure 5 comprises a guide piece 51 fixedly arranged on the corresponding pulling rod 3 that arranged in the corresponding handle swing arm 1. Furthermore, each handle swing arm 1 comprises a lateral sliding groove 13. One end of each pulling rod 3 is slidably arranged in a corresponding lateral sliding groove 13. Each guide piece 51 is a non-circular guide piece 511 fixedly connected to the corresponding pulling rod 3. Each guide piece 511 slidably matches with a corresponding lateral sliding groove 13. For example, each guide piece 511 may be a polygonal guide piece or the like, specifically, each guide piece 511 is selected from a square guide piece.

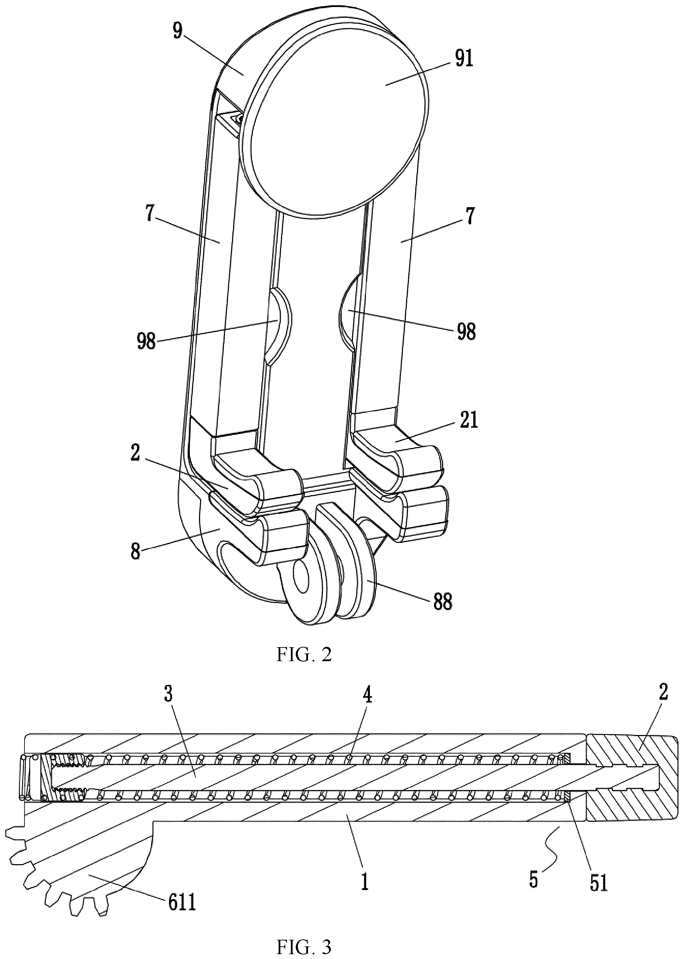

Furthermore, as shown in FIGS. 1 and 2, the vertical arm 9 comprises receiving grooves 97 configured to receive the lateral clamping arms 7 when the lateral clamping arms 7 are closed. Arrangement of the receiving grooves 97 is conductive to storing and hiding the lateral clamping arms 7, thereby reducing lateral size and volume of the clamping device.

Optionally, a side wall of each receiving groove 97 has a notch 98 for easy opening of the lateral clamping arms 7.

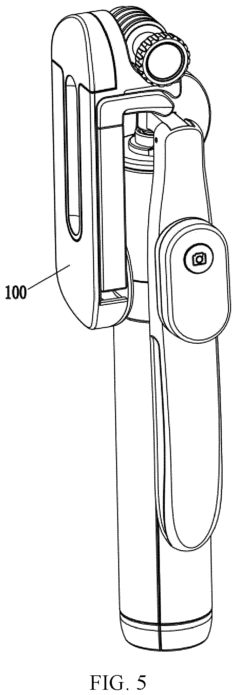

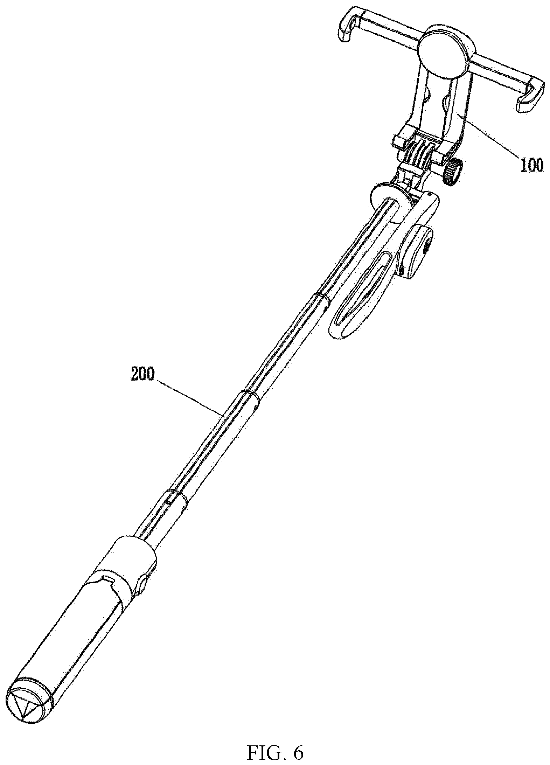

The clamping device further comprises a connecting head 88 connected with the base 8. The connecting head 88 is configured to rotatably connect with an external device. As shown in FIGS. 5 and 6, when the clamping device 100 is applied on a selfie device (for example, a selfie stick), arrangement of the connecting head 88 is configured to rotatably connect the clamping device 100 to a telescopic rod 200 of the selfie device Optionally, the vertical arm 9 further comprises a decorative cover 91. The decorative cover 91 is configured to shield rotating shaft ends of the lateral clamping arms 7. The decorative cover 91 helps to form a neat and beautiful appearance. The base 8 comprises a first anti-skid groove 81, and an inner side of the clamping head 2 comprises a second anti-skid groove 21. The first anti-skid groove 81 and the second anti-skid groove 21 ensure a firm grip on an object being held (e.g. the mobile phone).

It should be understood that the application of the present disclosure is not limited to the above embodiments. For those of ordinary skill in the art, improvements or changes can be made based on the above description, and all these improvements and changes should fall within the protection scope of the appended claims of the present disclosure.

## Claims

1. A clamping device, comprising:
a vertical arm;
a base arranged on a lower end of the vertical arm and configured for holding an external device; and
two lateral clamping arms rotatably arranged on two sides of the vertical arm;
wherein the two lateral clamping arms are configured to perform a lateral clamping function; at least one of the two lateral clamping arm is stretchable.

2. The clamping device according to claim 1, wherein the two lateral clamping arms are synchronously rotated in opposite directions to unfold or close by a linkage mechanism.

3. The clamping device according to claim 2, wherein the linkage mechanism comprises two rotating pieces; the two rotating pieces are fixedly connected to a respective lateral clamping arm; the two rotating pieces are meshed with each other.

4. The clamping device according to claim 3, wherein the two rotating pieces are two gears rotatably arranged on the vertical arm; the two gears are meshed with each other.

5. The clamping device according to claim 4, wherein the lateral clamping arms are rotatably arranged on the vertical arm through the gears.

6. The clamping device according to claim 3, wherein the two rotating pieces are respectively a gear and a chain ring; the gear and the chain ring are rotatably arranged on the vertical arm and are meshed with each other.

7. The clamping device according to claim 1, wherein the two lateral clamping arms are stretchable and are symmetrically arranged.

8. The clamping device according to claim 7, wherein each lateral clamping arm comprises a handle swing arm rotatably arranged on the vertical arm, a clamping head, a pulling rod, and an elastic piece; one end of each pulling rod is slidably arranged in a corresponding handle swing arm, the other end of each pulling rod is fixedly connected to a corresponding clamping head; each elastic piece is arranged in a corresponding handle swing arm; one end of each elastic piece is connected to a corresponding pulling rod and the other end of each elastic piece is connected to a corresponding handle swing arm, each elastic piece is configured to provide an elastic piece for stretching the pulling rod.

9. The clamping device according to claim 8, wherein each lateral clamping arm comprises an anti-rotation structure preventing rotation of the corresponding pulling rod.

10. The clamping device according to claim 9, wherein each anti-rotation structure comprises a guide piece fixedly arranged on the corresponding pulling rod that arranged in the corresponding handle swing arm.

11. The clamping device according to claim 10, wherein each handle swing arm comprises a lateral sliding groove; one end of each pulling rod is slidably arranged in a corresponding lateral sliding groove, each guide piece is a non-circular guide piece fixedly connected to the corresponding pulling rod; each guide piece slidably matches with a corresponding lateral sliding groove.

12. The clamping device according to any claims 1-11, wherein the vertical arm comprises receiving grooves configured to receive the lateral clamping arms when the lateral clamping arms are closed.

13. The clamping device according to claim 12, wherein a side wall of each receiving groove comprises a notch for easy opening of the lateral clamping arms.

14. The clamping device according to claim 1, wherein the clamping device further comprises a connecting head connected with the base; the connecting head is configured to rotatably connect with the external device.

15. The clamping device according to claim 1, wherein the vertical arm further comprises a decorative cover; the decorative cover is configured to shield rotating shaft ends of the lateral clamping arms.

16. The clamping device according to claim 8, wherein a first anti-skid groove is arranged on the base and an inner side of the clamping head comprises a second anti-skid groove.
